# EUROPEAN PATENT SPECIFICATION

(11) **EP 3 406 807 B1**
(45) Date of publication and mention of the grant of the patent: **01.09.2021**
(21) Application number: 17191660.4
(22) Date of filing: 18.09.2017
(51) Int. Cl.: E03C 1/04

(54) **VALVE FOR AUTOMATICALLY DISCHARGING COLD WATER**
VENTIL ZUM AUTOMATISCHEN AUSLASSEN VON KALTWASSER
SOUPAPE POUR DÉCHARGER AUTOMATIQUEMENT DE L'EAU FROIDE

(30) Priority: 22.05.2017 CN 201710368497
(43) Date of publication of application: 28.11.2018
(73) Proprietor: Fujian Xihe Sanitary Ware Technology Co., Ltd., Nan'an City, Fujian 362304 (CN)
(72) Inventor: Lin, Xiaofa, Nan´an City, Fujian (CN); Lin, Xiaoshan, Nan´an City, Fujian (CN); Zhang, Jinxing, Nan´an City, Fujian (CN); Liu, Qiqiao, Nan´an City, Fujian (CN); Deng, Xiaoqing, Nan´an City, Fujian (CN)
(74) Representative: Patentanwälte Bals & Vogel

(56) References cited:
- CN-A- 105 757 292
- CN-U- 204 477 468
- CN-U- 205 260 926
- DE-A1-102006 054 791

## Description

The present invention relates to the field of valve control related to mixed water, and more particularly to a valve for automatically discharging cold water, which is disposed, in flow direction, behind a water mixing valve.

Usually, mixed water of hot water and cold water (hereinafter referred to as mixed water) mixed by a cold and hot water mixing valve (hereinafter referred to as a water mixing valve) is required when people are taking a shower, washing hands or in some other operations. Before discharging the mixed water with suitable temperature (hereinafter referred to as warm water), the cooled mixed water (hereinafter referred to as cold water) remaining in a pipeline has to be discharged thoroughly first. Therefore, the user needs to wait nearby after opening the water mixing valve, and constantly touch the discharged mixed water with a hand to test whether the cold water is discharged thoroughly.

There are many cold water discharging valves disposed behind the water mixing valve in the prior art, but shortcoming exists in terms of function such that the following three functions can not be achieved simultaneously on an automatic cold water discharging valve: 1. cold water is automatically discharged; 2. after the cold water is discharged thoroughly, instead of flowing out automatically, the warm water is controlled by users to flow out, thus a standby function is realized; 3. the warm water can be stopped by simply closing the front water mixing valve, and a warm water discharging channel is automatically reset and closed to avoid misoperation when the warm water stops flowing out.

Secondly, in some technical solutions, a temperature sensing bar is adopted as a temperature sensing element, and owing to its longer size and non-obvious heat expansion and cold contraction, expansion failure will be caused.

The present invention aims to overcome the above defects or problems present in the prior art, and provide a valve for automatically discharging cold water. By means of the valve disclosed by the present invention, a function of automatically discharging cold water and a standby function can be achieved, and a warm water discharging channel is automatically reset and closed to avoid misoperation when warm water stops flowing out. Meanwhile, the present invention also redesigns a temperature sensing element to make the heat expansion and cold contraction more reliable.

In order to achieve the above purpose, the present invention provides a technical solution in accordance with independent claim 1.

According to the present invention, the first valve assembly further comprises a first chamber with an opening at one end; the valve body is provided with a first annular water passing surface and the first annular water passing surface is provided with a first water passing hole communicated with the first water inlet; the first annular water passing surface is provided opposite to the opening of the first channel, and a gap always communicated with the first water outlet is formed between the first annular water passing surface and the opening of the first channel; the first plugging unit opens or closes the first channel by realizing or cutting off the communication between the first water passing hole and the gap.

Preferably, the first plugging unit comprises a first annular plug, a sliding base with a through hole, and a first spring; the first annular plug is fixedly connected with the sliding base and faces the first water passing hole; the sliding base is configured to slide along an inner wall of the first chamber in a sealing manner, and a temperature sensing chamber is formed between the sliding base and a closed side of the first chamber; the temperature sensing chamber is always communicated with the first water passing hole via the through hole in the sliding base and a central hole of the first annular plug; the temperature sensing unit is a memory spring and provided inside the temperature sensing chamber; the first spring is provided between the sliding base and the first annular water passing surface and sleeved on the first annular plug; the memory spring expends with heat and pushes the sliding base to drive the first annular plug to cut off the communication between the first water passing hole and the gap; the memory spring contracts with cold, and the first spring pushes the sliding base and the first annular plug away from the first annular water passing surface to realize the communication between the first water passing hole and the gap.

Preferably, the first chamber is formed by an inner cavity of a valve cover, and an outer wall of the valve cover is fixedly connected to the valve body.

According to the present invention, the second valve assembly comprises a valve seat sealingly connected in the valve body and a second plugging unit; a water passing path is provided inside the valve seat, and is a part of the second channel; the second plugging unit is slidably provided to the valve seat to open or close the water passing path and further open or close the second channel.

According to the present invention, the second plugging unit comprises a sliding rod, a second annular plug, a button and a second spring; the water passing path is provided with a step hole, and the second annular plug opens or closes the water passing path by realizing or cutting off the communication between a big hole and a small hole of the step hole; the sliding rod slides inside the step hole with one end being located in the big hole, and the other end passing through the small hole, extending out of the valve seat and being fixedly connected with the button; the second annular plug is fixedly connected to a part, which is located in the big hole, of the sliding rod, with the outer diameter being greater than the aperture of the small hole and less than the aperture of the big hole; the second spring is sleeved on the sliding rod and located between the valve seat and the button. Under an initial state, the second annular plug presses against a step surface of the step hole and cut off the communication between the big hole and the small hole; when the button is pressed, the sliding rod drives the second annular plug to be away from the step surface and realize the communication between the big hole and the small hole; when the button is released and the sliding rod and the second annular plug undergo a water pressure that is greater than or equal to a deformation force of the second spring, the water passing path is kept open; when the button is released and the sliding rod and the second annular plug undergo a water pressure that is less than the deformation force of the second spring, the second spring drives the sliding rod and the second annular plug to return to the initial state.

Preferably, the valve seat is provided with a second water inlet, a second water outlet and a second water passing hole; the second water inlet is provided in a hole wall of the big hole and is always communicated with the first water inlet; the second water outlet is provided in a hole wall of the small hole and is always communicated with the first water outlet; a water passing path is formed between the second water inlet and the second water outlet; the second water passing hole is provided in an end surface of the big hole of the valve seat and is always communicated with the second water inlet.

Preferably, the valve body is provided with a second annular water passing surface, and a third water passing hole always communicated with the first water passing hole is provided on the second annular water passing surface and has an aperture less than the outer diameter of the second annular plug; the end surface of the big hole of the valve seat presses against the second annular water passing surface in a sealing manner; under an initial state, the second water passing hole is communicated with the third water passing hole; when the button is pressed, the sliding rod drives the second annular plug to press against the second annular water passing surface to plug the third water passing hole.

Preferably, the valve for automatically discharging cold water further comprises a hydroelectric generator and a reminding assembly, wherein the hydroelectric generator is provided at a position, close to the first water inlet, inside the valve body, and is electrically connected with the reminding assembly and supplies power to the reminding assembly; the reminding assembly is fixedly mounted in the valve body and comprises a temperature sensor, a control unit, a speaker and a manual opening and closing unit; the temperature sensor is combined with the hydroelectric generator and is provided at a position close to the first water inlet for sending water temperature information to the control unit electrically connected therewith; the control unit controls the speaker electrically connected therewith to emit a reminding signal when the received water temperature information reaches an artificially set condition; the manual opening and closing unit is electrically connected with the speaker and configured to manually open or close a function of the speaker to emit the reminding signal.

Compared to the prior art, the advantages of the technical solutions of the present invention include:
1. The temperature sensing unit is provided in the temperature sensing chamber, while the temperature sensing chamber is always communicated with the first water passing hole, so that the temperature sensing unit can effectively sense the water temperature.
2. The function of automatically discharging cold water is realized under the combined action of the temperature sensing unit and the first spring to the sliding base.
3. The temperature sensing unit is designed as the memory spring, which is obvious in heat expansion and cold contraction and is therefore more reliable.
4. Since the second annular plug closes the second channel by cutting off the communication between the big hole and the small hole under the initial state, no warm water flows out after the cold water is discharged thoroughly; therefore, the standby function is achieved. The standby function is of particular importance in the case where many persons in the house need to successively use the shower within a period of time.
5. By manually pressing the button to control the opening of the second channel, the function of manually controlling the discharging of warm water is realized.
6. The reset of the second annular plug can be achieved under the action of the deformation force of the second spring just by stopping water from flowing into the first water inlet (closing the water mixing valve), thereby avoiding the possibility of misoperation.
7. When the button is pressed, the second annular plug presses against the second annular water passing surface. Therefore, the action force of the water pressure in the water passing path against the second annular plug and the sliding rod is more reliable.
8. The first chamber, the temperature sensing unit, the sliding base and the first annular plug can be mounted in the valve cover, and are then mounted onto the valve body conveniently, such that their cleaning and maintenance are convenient.
9. By providing the hydroelectric generator and the reminding assembly, feedback of the water temperature to the user is achieved and scald can also be avoided.

To describe the technical solutions in the embodiments of the present invention more clearly, the drawings used will be introduced as below. It is obvious for those skilled in the art that the drawings described below are merely some embodiments of the present invention, the drawings should not be considered as restricting present invention. Modifications of the present invention are provided in dependent claims.
Fig. 1 is an exploded view according to an embodiment of the present invention;
Fig. 2 is a schematic view when the embodiment of the present invention is in a cold water discharging state;
Fig. 3 is a schematic view when the embodiment of the present invention is in a standby state;
Fig. 4 is a schematic view when the embodiment of the present invention is in a warm water discharging state;
Fig. 5 is a schematic view of a circuit of a reminding assembly in the embodiment of the present invention.

Explanation for the main reference numerals:
A valve body 1, comprising: a first water inlet 11; a first water outlet 12; a first annular water passing surface 13 comprising a first water passing hole 131; a second annular water passing surface 14 comprising a third water passing hole 141;
A first channel 2;
A first valve assembly 3 comprising: a valve cover 31; a memory spring 32; a sliding base sealing ring 33; a sliding base 34; a first annular plug 35; a first spring 36; and a gap 37;
A second channel 4;
A second valve assembly 5 comprising: a valve seat 51 comprising a second water inlet 511, a second water outlet 512, a second water passing hole 513, a big hole 514, a step surface 515 and a small hole 516; a second annular plug 52; a sliding rod sealing ring 53; a second spring 54; a sliding rod 55; a first valve seat sealing ring 56; a second valve seat sealing ring 57; and a button 58;
A valve seat cover 6;
A hydroelectric generator 7;
A reminding assembly 8 comprising: an end cover 81; a manual opening and closing unit 82; a reminding unit 83; and a control unit 84.

The terms such as "first", "second" or "third", etc. used in the claims, the description and the accompanying drawings of the present invention are intended to distinguish different objects and not intended to describe a particular order.

The terms such as "comprise", "include" and their modifications used in the claims, the description and the accompanying drawings of the present invention are intended to express "include, but not limited to".

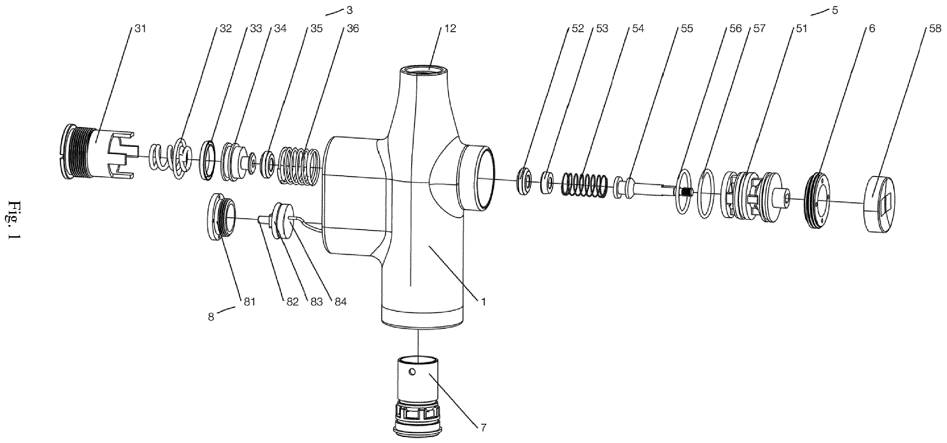

Referring to Figs. 1 to 5, the embodiments of the present invention are shown. In these embodiments, a valve for automatically discharging cold water comprises a valve body 1, a first channel 2, a first valve assembly 3, a second channel 4, a second valve assembly 5, a valve seat cover 6, a hydroelectric generator 7 and a reminding assembly 8.

Wherein, the valve body 1 is provided with a first water inlet 11, a first water outlet 12, a first annular water passing surface 13 and a second annular water passing surface 14.

The first water inlet 11 is configured to connect a front water mixing valve to access mixed water.

The first water outlet 12 is configured to connect a shower head to discharge cold water or warm water.

The first annular water passing surface 13 is formed inside the valve body 1 and provided with a first water passing hole 131 thereon.

The second annular water passing surface 14 is formed inside the valve body 1 and provided with a third water passing hole 141 thereon.

The third water passing hole 141 is always communicated with the first water passing hole 131.

The first channel 2 is formed between the first water inlet 11 and the first water outlet 12 inside the valve body 1, and sequentially passes through the first water inlet 11, a second water inlet 511, a second water passing hole 513, the third water passing hole 141, the first water passing hole 131 and a gap 37, and finally reaches the first water outlet 12.

The first valve assembly 3 is configured to open or close the first channel 2 and comprises a valve cover 31, a temperature sensing unit and a first plugging unit, wherein the temperature sensing unit is a memory spring 32, the first plugging unit comprises a sliding base sealing ring 33, a sliding base 34, a first annular plug 35 and a first spring 36.

An inner cavity of the valve cover 31 forms a first chamber with an opening at one end, and an outer wall of the valve cover 31 is fixed in the valve body 1 in a sealing manner.

The opening of the first chamber is provided opposite to the first annular water passing surface 13. The gap 37 is formed between the first chamber and the first annular water passing surface 13, and always communicated with the first water outlet 12.The first annular plug 35 is fixedly connected to the sliding base 34 and faces the first water passing hole 131.

The sliding base 34 is provided with a through hole, and is configured to slide along an inner wall of the first chamber in a sealing manner via the sliding base sealing ring 33.

A temperature sensing chamber is formed between the sliding base 34 and a closed side of the first chamber.

The temperature sensing chamber is always communicated with the first water passing hole 131 via the through hole in the sliding base 34 and a central hole of the first annular plug 35, and therefore, mixed water passing through the first water passing hole 131 can enter the temperature sensing chamber.

The memory spring 32 is provided inside the temperature sensing chamber, and one end of the memory spring 32 is pressing against the closed end of the valve cover 31, and the other end of the memory spring 32 is pressing against one end of the sliding base 34 away from the first water passing hole 131.

The first spring 36 is provided between the sliding base 34 and the first annular water passing surface 13 and sleeved on the first annular plug 35.

The second channel 4 connected in parallel with the first channel 2 is formed between the first water inlet 11 and the first water outlet 12 inside the valve body 1, sequentially passes through the first water inlet 11, the second water inlet 511, a big hole 514, a step surface 515, a small hole 516 and the second water outlet 512, and finally reaches the first water outlet 12.

The second valve assembly 5 is configured to open or close the second channel 4 and comprises a valve seat 51 and a second plugging unit; wherein the second plugging unit comprises a second annular plug 52, a sliding rod sealing ring 53, a second spring 54, a sliding rod 55, a first valve seat sealing ring 56, a second valve seat sealing ring 57 and a button 58.

The valve seat 51 is connected with the valve body 1 in a sealing manner via the first valve seat sealing ring 56 and the second valve seat sealing ring 57. The valve seat cover 6 is in threaded connection with the valve body 1 for fastening the valve seat 51 in the valve body 1.

The valve seat 51 is provided with a step hole, and the step hole is composed of the big hole 514 and the small hole 516 between which the step surface 515 is formed.

A hole wall of the big hole 514 is provided with the second water inlet 511 which is always communicated with the first water inlet 11.

A hole wall of the small hole 516 is provided with the second water outlet 512 which is always communicated with the first water outlet 12.

A water passing path, being a part of the second channel 4, is formed between the second water inlet 511 and the second water outlet 512.

An end surface of the big hole 514 of the valve seat 51 is also provided with the second water passing hole 513 which is always communicated with the second water inlet 511. The end surface of the big hole 514 of the valve seat 51 presses against the second annular water passing surface 14 in a sealing manner. The aperture of the second water passing hole 513 is greater than that of the third water passing hole 141.

The sliding rod 55 slides inside the step hole in a sealing manner via the sliding rod sealing ring 53. One end of the sliding rod 55 is located inside the big hole 514, and the other end of the sliding rod 55 passes through the small hole 516, extends out of the valve seat 51, and is fixedly connected with the button 58.

The second annular plug 52 is fixedly connected to a part of the sliding rod 55 located in the big hole 514. The outer diameter of the second annular plug 52 is greater than the aperture of the small hole 516, less than the aperture of the big hole 514 and also greater than the aperture of the third water passing hole 141.

The second spring 54 is sleeved on the sliding rod 55 and located between the valve seat 51 and the button 58.

The hydroelectric generator 7 is close to the first water inlet 11 inside the valve body 1. The hydroelectric generator 7 is electrically connected with the reminding assembly 8 and supplies power to the reminding assembly 8.

The reminding assembly 8 is fixedly connected in the valve body 1, and comprises a temperature sensor, an end cover 81, a manual opening and closing unit 82, a reminding unit 83 and a control unit 84.

The end cover 81 is in threaded connection to the valve body 1 in a sealing manner so as to seal the fixed parts of the reminding unit 83, the control unit 84 and the manual opening and closing unit 82 inside the valve body 1.

The temperature sensor is combined with the hydroelectric generator 7 and is disposed close to the first water inlet 11. The temperature sensor sends water temperature information to the control unit 84 electrically connected therewith.

A speaker is adopted as the reminding unit 83 in the present embodiment.

The manual opening and closing unit 82 is electrically connected with the reminding unit /speaker 83 and configured to manually open or close a function of the reminding unit/speaker 83 to emit a reminding signal. In the present embodiment, a driving lever or a button for controlling the speaker to generate a sound is adopted as the manual opening and closing unit 82.

The control unit 84 controls the reminding unit/speaker 83 electrically connected therewith to emit a reminding signal when the received water temperature information reaches a corresponding condition. In the present embodiment, the control unit 84 specifically uses a chip EM78P3C2 and has been set as follows: the speaker is controlled to generate a soft sound when a water temperature is below 36°C; no sound is emitted when the water temperature is 37-39°C; a warning sound is emitted when the water temperature is 40-45°C; and a sharp alarm sound is emitted when the water temperature is over 46°C.

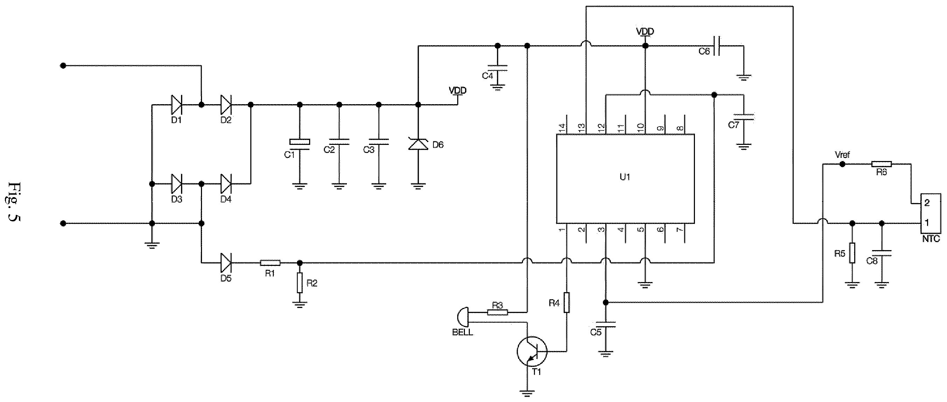

Fig. 5 illustrates an electrical connection relationship of the reminding assembly 8 in the present embodiment. An alternating current of the hydroelectric generator 7 supplies a direct current VDD to a control unit U1, the temperature sensor NTC and the speaker BELL via a rectifying circuit. The direct current VDD is accessed to a pin 10 of the control unit U1, the speaker BELL and a pin 2 of the temperature sensor NTC. A signal from the temperature sensor NTC is input to the control unit U1 via a pin 13 of the control unit U1. A control signal of the control unit U1 is output via the pin 1, then amplified by a triode T1 and connected to the speaker BELL.

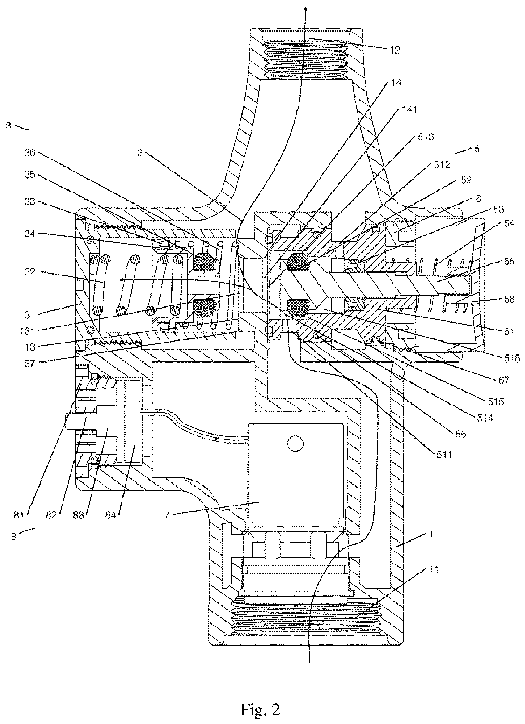

Fig. 2 shows a schematic view of the valve for automatically discharging cold water in a cold water discharging state in the present embodiment, when the temperature of the mixed water passing through the first water passing hole 131 is relatively low. The temperature sensing chamber is communicated with the first water passing hole 131 and the first water inlet 11, and the memory spring 32 inside the temperature sensing chamber contracts with cold. At this time, the first spring 36, under the action of a deformation force, pushes the sliding base 34 and the first annular plug 35 away from the first annular water passing surface 13, thereby realizing the communication between the first water passing hole 131 and the gap 37. Thus, the first channel 2 is communicated, and the cold water is discharged from the first water outlet 12.

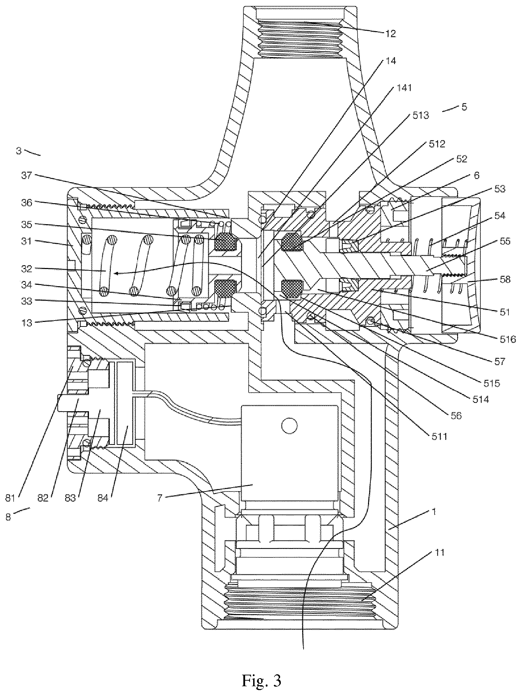

Fig. 3 shows a schematic view of the valve for automatically discharging cold water in a standby state in the present embodiment, when the temperature of the mixed water passing through the first water passing hole 131 is relatively high. The temperature sensing chamber is communicated with the first water passing hole 131 and the first water inlet 11, and the memory spring 32 inside the temperature sensing chamber expands with heat and pushes the sliding base 34 to overcome the deformation force of the first spring 36, such that the first annular plug 35 presses against the first water passing hole 131, thereby cutting off the communication between the first water passing hole 131 and the gap 37. Thus, the first channel 2 is not communicated and no water is discharged from the first water outlet 12 anymore. In this case, if the user does not press the button 58 to open the second channel 4, the valve for automatically discharging cold water is in the standby state under which no water flows out, till the mixed water inside the pipeline is cooled again to enter a cold water discharging state, or the user presses the button 58 to enter a warm water discharging state.

Under the state shown in Fig. 3, the second valve assembly 5 is in the initial state. Under the initial state, the sliding rod 55, under the action of the deformation force of the second spring 54, allows the second annular plug 52 to press against the step surface 515 of the step hole, thereby cutting off the communication between the big hole 514 and the small hole 516, and also cutting off the water passing path and the second channel 4.

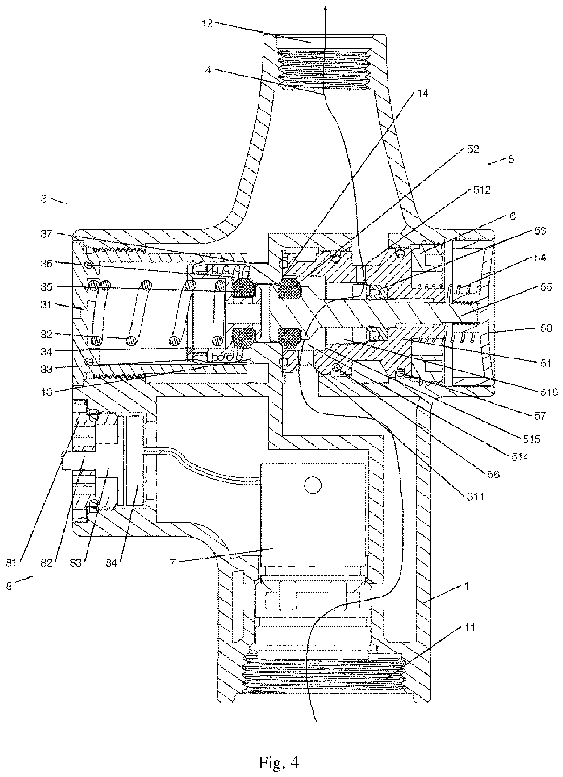

Fig. 4 shows a schematic view of the valve for automatically discharging cold water in the warm water discharging state in case of pressing the button 58 in the present embodiment. When the button 58 is pressed, the sliding rod 55 overcomes the deformation force of the second spring 54 to drive the second annular plug 52 to be away from the step surface 515, press against the second annular water passing surface 14 and plug the third water passing hole 141, thereby realizing the communication between the big hole 514 and the small hole 516. The water passing path is communicated, the second water inlet 511 is communicated with the second water outlet 512, the second channel 4 is opened, and warm water is discharged from the first water outlet 12.

At this time, if the button is released, the deformation force of the second spring 54 can still be overcome since the sliding rod 55 and the second annular plug 52 undergo a water pressure inside the second channel 4. Therefore, the second annular plug 52 is still kept at a position under the warm water discharging state, the second channel 4 is still kept open, and the warm water is still discharged from the first water outlet 12.

If it is necessary to stop the discharge of warm water, the front water mixing valve must be closed to cut off water supply for the first water inlet 11, since there is no control means designed for the valve for automatically discharging cold water as shown in the embodiment. At this time, the water pressure applied to the sliding rod 55 and the second annular plug 52 is gradually reduced, when such pressure is smaller than the deformation force of the second spring 54, the second spring 54 urges the button 58 to drive the sliding rod 55 and the second annular plug 52 to return to an initial state under the standby state. Thus as long as no water flows from the first water outlet, the button 58, the sliding rod 55 and the second annular plug 52 have been reset, thereby avoiding misoperation.

As can be seen from the above embodiment, the temperature sensing unit is provided in the temperature sensing chamber, while the temperature sensing chamber is always communicated with the first water passing hole 131, so that the temperature sensing unit can effectively sense the water temperature. The function of automatically discharging cold water is realized under the combined action of the temperature sensing unit and the first spring 36 to the sliding base 34. The temperature sensing unit is designed as the memory spring 32, which is obvious in heat expansion and cold contraction and is therefore more reliable. Since the second annular plug 52 closes the second channel 4 by cutting off the communication between the big hole 514 and the small hole 516 under the initial state, no warm water flows out after the cold water is discharged thoroughly; therefore, the standby function is achieved. The standby function is of particular importance in the case where many persons in the house need to successively use the shower within a period of time. By manually pressing the button 58 to control the opening of the second channel 4, the function of manually controlling the discharging of warm water is realized. The reset of the second annular plug 52 can be achieved under the action of the deformation force of the second spring 54 just by stopping water from flowing into the first water inlet 11 (closing the water mixing valve), thereby avoiding the possibility of misoperation. When the button 58 is pressed, the second annular plug 52 presses against the second annular water passing surface 14. Therefore, the action force of the water pressure in the water passing path against the second annular plug 52 and the sliding rod 55 is more reliable. The first chamber, the temperature sensing unit, the sliding base 34 and the first annular plug 35 can be mounted in the valve cover 31, and are then mounted onto the valve body 1 conveniently, such that their cleaning and maintenance are convenient. By providing the hydroelectric generator 7 and the reminding assembly 8, feedback of the water temperature to the user is achieved and scald can also be avoided.

Based on the above analysis, the technical solution disclosed by the present invention solves all the technical problems listed in the description and realizes the corresponding technical effect.

The description to the above description and embodiments is intended to explain the protection scope of the present invention, but does not constitute a limitation thereof.

### List of reference signs

- 1: valve body
- 2: first channel
- 3: first valve assembly
- 4: second channel
- 5: second valve assembly
- 6: valve seat cover
- 7: hydroelectric generator
- 8: reminding assembly

- 11: water inlet
- 12: first water outlet
- 13: first water passing surface
- 14: second water passing surface

- 31: valve cover
- 32: memory spring
- 33: sliding base sealing ring
- 34: sliding base
- 35: first annular plug
- 36: first spring
- 37: gap

- 51: valve seat
- 52: second annular plug
- 53: sliding rod sealing ring
- 54: second spring
- 55: sliding rod
- 56: first valve seat sealing ring
- 57: second valve seat sealing ring
- 58: button
- 81: end cover
- 82: manual opening and closing unit
- 83: reminding unit
- 84: control unit

- 131: first water passing hole

- 141: third water passing hole

- 511: second water inlet
- 512: second water outlet
- 513: second water passing hole
- 514: big hole
- 515: step surface
- 516: small hole

## Claims

1. A valve for automatically discharging cold water, comprising: a valve body (1) provided with a first water inlet (11) and a first water outlet (12); a first channel (2) for discharging cold water, provided between the first water inlet (11) and the first water outlet (12) inside the valve body (1); a first valve assembly (3) having a temperature sensing unit and a first plugging unit: a second channel (4) for discharging mixed water, provided between the first water inlet (11) and the first water outlet (12) inside the valve body (1) and connected in parallel with the first channel (2); a second valve assembly (5) configured to open or close the second channel(4); wherein the first plugging unit is configured to open or close the first channel (2) by means of heat expansion and cold contraction of the temperature sensing unit, wherein the first valve assembly (3) further comprises a first chamber with an opening at one end thereof; the valve body (1) is provided with a first annular water passing surface (13) and the first annular water passing surface (13) is provided with a first water passing hole (131) communicated with the first water inlet (11); the first annular water passing surface (13) is provided opposite to an opening of the first channel (2), and a gap (37) always communicated with the first water outlet (12) is formed between the first annular water passing surface (13) and the opening of the first channel (2); the first plugging unit opens or closes the first channel (2) by realizing or cutting off the communication between the first water passing hole (131) and the gap (37), **characterised in that** the second valve assembly (5) comprises a valve seat (51) sealingly connected in the valve body (1) and a second plugging unit; a water passing path is provided inside the valve seat, and is a part of the second channel (4); the second plugging unit is slidably provided to the valve seat (51) to open or close the water passing path and further open or close the second channel (4), wherein the second plugging unit comprises a sliding rod (55), a second annular plug (52), a button (58) and a second spring (54); the water passing path is provided with a step hole, and the second annular plug (52) opens or closes the water passing path by realizing or cutting off the communication between a big hole (514) and a small hole (516) of the step hole; the sliding rod (55) slides inside the step hole with one end being located in the big hole (514), and the other end passing through the small hole (516), extending out of the valve seat (51) and being fixedly connected with the button (58); the second annular plug (52) is fixedly connected to a part, which is located in the big hole (514), of the sliding rod (55), with the outer diameter being greater than the aperture of the small hole (516) and less than the aperture of the big hole (514); the second spring (54) is sleeved on the sliding rod (55) and located between the valve seat (51) and the button (58); under an initial state, the second annular plug (52) presses against a step surface (515) of the step hole and cuts off the communication between the big hole (514) and the small hole (516); when the button (58) is pressed, the sliding rod (55) drives the second annular plug (52) to be away from the step surface (515) and realize the communication between the big hole (514) and the small hole (516); when the button (58) is released and the sliding rod (55) and the second annular plug (52) undergo a water pressure that is greater than or equal to a deformation force of the second spring (54), the water passing path is kept open; when the button (58) is released and the sliding rod (55) and the second annular plug (52) undergo a water pressure that is less than the deformation force of the second spring (54), the second spring (54) drives the sliding rod (55) and the second annular plug (52) to return to the initial state.

2. The valve for automatically discharging cold water according to claim 1, wherein:
the first plugging unit comprises a first annular plug(35), a sliding base(34) with a through hole, and a first spring(36);
the first annular plug(35) is fixedly connected with the sliding base(34) and faces the first water passing hole(131);
the sliding base(34) is configured to slide along an inner wall of the first chamber in a sealing manner, and a temperature sensing chamber is formed between the sliding base(34) and a closed side of the first chamber;
the temperature sensing chamber is always communicated with the first water passing hole(131) via the through hole in the sliding base(34) and a central hole of the first annular plug(35);
the temperature sensing unit is a memory spring(32) and provided inside the temperature sensing chamber;
the first spring(36) is provided between the sliding base(34) and the first annular water passing surface(13) and sleeved on the first annular plug(35);
the memory spring(32) expends with heat and pushes the sliding base(34) to drive the first annular plug(35) to cut off the communication between the first water passing hole(131) and the gap(37);
the memory spring(32) contracts with cold, and the first spring(36) pushes the sliding base(34) and the first annular plug(35) away from the first annular water passing surface(13) to realize the communication between the first water passing hole(131) and the gap(37).

3. The valve for automatically discharging cold water according to claim 1, wherein the first chamber is formed by an inner cavity of a valve cover(31), and an outer wall of the valve cover(31) is fixedly connected to the valve body(1).

4. The valve for automatically discharging cold water according to any of claims 1 to 3, wherein the valve seat(51) is provided with a second water inlet(511), a second water outlet(512) and a second water passing hole(513);
the second water inlet(511) is provided as a hole in the wall of the big hole(514) and is always communicated with the first water inlet(11);
the second water outlet(512) is provided as a hole in the wall of the small hole(516) and is always communicated with the first water outlet(11);
the water passing path is formed between the second water inlet(511) and the second water outlet(512);
the second water passing hole(513) is provided in an end surface of the big hole(514) of the valve seat(51) and is always communicated with tne second water inlet(511).

5. The valve for automatically discharging cold water according to any of claims 1 to 4, wherein the valve body (1) is provided with a second annular water passing surface (14), and a third water passing hole (141) always communicated with the first water passing hole (131) is provided on the second annular water passing surface (14) and has an aperture less than the outer diameter of the second annular plug (52); the end surface of the big hole (514) of the valve seat (51) presses against the second annular water passing surface (14) in a sealing manner;under an initial state, the second water passing hole (513) is communicated with the third water passing hole (141); when the button (58) is pressed, the sliding rod (55) drives the second annular plug (52) to press against the second annular water passing surface (14) to plug the third water passing hole (141).

6. The valve for automatically discharging cold water according to claim 1, further comprising a hydroelectric generator(7) and a reminding assembly(8), wherein
the hydroelectric generator(7) is provided at a position, close to the first water inlet(11), inside the valve body(1), and is electrically connected with the reminding assembly(8) and supplies power to the reminding assembly(8);
the reminding assembly(8) is fixedly mounted in the valve body(1) and comprises a temperature sensor, a control unit(84), a speaker(83) and a manual opening and closing unit(82);
the temperature sensor is combined with the hydroelectric generator(7) and is provided at a position close to the first water inlet(11) for sending water temperature information to the control unit(84) electrically connected therewith;
the control unit(84) controls the speaker(83) electrically connected therewith to emit a reminding signal when the received water temperature information reaches an artificially set condition;
the manual opening and closing unit(82) is electrically connected with the speaker(83) and configured to manually open or close a function of the speaker(83) to emit the reminding signal.

## Patentansprüche

1. Ein Ventil zur automatischen Abgabe von kaltem Wasser, umfassend:
einen Ventilkörper (1), der mit einem ersten Wassereinlass (11) und einem ersten Wasserauslass (12) versehen ist;
einen ersten Kanal (2) zum Ableiten von kaltem Wasser, der zwischen dem ersten Wassereinlass (11) und dem ersten Wasserauslass (12) im Inneren des Ventilkörpers (1) vorgesehen ist;
eine erste Ventilbaugruppe (3) mit einer Temperaturfühlereinheit und einer ersten Verstopfungseinheit;
einen zweiten Kanal (4) zum Ableiten von Mischwasser, der zwischen dem ersten Wassereinlass (11) und dem ersten Wasserauslass (12) im Inneren des Ventilkörpers (1) vorgesehen und parallel zum ersten Kanal (2) angeschlossen ist;
eine zweite Ventilbaugruppe (5), die zum Öffnen oder Schließen des zweiten Kanals (4) konfiguriert ist;
wobei
die erste Verstopfungseinheit so konfiguriert ist, dass sie den ersten Kanal (2) durch Wärmeausdehnung und Kältekontraktion der Temperaturfühlereinheit öffnet oder
schließt,
wobei die erste Ventilbaugruppe (3) ferner eine erste Kammer mit einer Öffnung an einem Ende davon umfasst;
der Ventilkörper (1) mit einer ersten ringförmigen Wasserdurchgangsfläche (13) versehen ist und die erste ringförmige Wasserdurchgangsfläche (13) mit einem ersten Wasserdurchgangsloch (131) versehen ist, das mit dem ersten Wassereinlass (11) in Verbindung steht;
die erste ringförmige Wasserdurchgangsfläche (13) gegenüber einer Öffnung des ersten Kanals (2) vorgesehen ist, und ein Spalt (37), der immer mit dem ersten Wasserauslass (12) in Verbindung steht, zwischen der ersten ringförmigen Wasserdurchgangsfläche (13) und der Öffnung des ersten Kanals (2) gebildet ist;
die erste Verstopfungseinheit öffnet oder schließt den ersten Kanal (2), indem sie die Verbindung zwischen dem ersten Wasserdurchgangsloch (131) und dem Spalt (37) herstellt oder unterbricht,
**dadurch gekennzeichnet, dass** die zweite Ventilbaugruppe (5) einen Ventilsitz (51), der abdichtend in dem Ventilkörper (1) verbunden ist, und eine zweite Verstopfungseinheit umfasst;
innerhalb des Ventilsitzes ein Wasserdurchgangsweg vorgesehen ist, der ein Teil des zweiten Kanals (4) ist;
die zweite Verstopfungseinheit verschiebbar am Ventilsitz (51) vorgesehen ist, um den Wasserdurchgangsweg zu öffnen oder zu schließen und den zweiten Kanal (4) weiter zu öffnen oder zu schließen,
wobei die zweite Verstopfungseinheit eine Gleitstange (55), einen zweiten ringförmigen Stopfen (52), einen Knopf (58) und eine zweite Feder (54) umfasst;
der Wasserdurchgangsweg mit einem Stufenloch versehen ist, und der zweite ringförmige Stopfen (52) den Wasserdurchgangsweg öffnet oder schließt, indem er die Verbindung zwischen einem großen Loch (514) und einem kleinen Loch (516) des Stufenlochs herstellt oder unterbricht;
die Gleitstange (55) im Inneren des Stufenlochs gleitet, wobei sich ein Ende im großen Loch (514) befindet und das andere Ende durch das kleine Loch (516) verläuft, aus dem Ventilsitz (51) herausragt und fest mit dem Knopf (58) verbunden ist;
der zweite ringförmige Stopfen (52) fest mit einem Teil der Gleitstange (55) verbunden ist, der sich in dem großen Loch (514) befindet, wobei der Außendurchmesser größer als die Öffnung des kleinen Lochs (516) und kleiner als die Öffnung des großen Lochs (514) ist;
die zweite Feder (54) auf der Gleitstange (55) aufgesteckt ist und sich zwischen dem Ventilsitz (51) und dem Knopf (58) befindet;
in einem Ausgangszustand der zweite ringförmige Stopfen (52) gegen eine Stufenfläche (515) des Stufenlochs drückt und die Verbindung zwischen dem großen Loch (514) und dem kleinen Loch (516) unterbricht;
wenn der Knopf (58) gedrückt wird, die Gleitstange (55) den zweiten ringförmigen Stopfen (52) antreibt, um von der Stufenfläche (515) entfernt zu sein und die Verbindung zwischen dem großen Loch (514) und dem kleinen Loch (516) zu realisieren;
wenn der Knopf (58) losgelassen wird und die Gleitstange (55) und der zweite ringförmige Stopfen (52) einen Wasserdruck erfahren, der größer oder gleich einer Verformungskraft der zweiten Feder (54) ist, der Wasserdurchgangsweg offen gehalten wird;
wenn der Knopf (58) losgelassen wird und die Gleitstange (55) und der zweite ringförmige Stopfen (52) einem Wasserdruck ausgesetzt sind, der kleiner ist als die Verformungskraft der zweiten Feder (54), die zweite Feder (54) die Gleitstange (55) und den zweiten ringförmigen Kegel (52) antreibt, um in den Ausgangszustand zurückzukehren.

2. Ventil zur automatischen Abgabe von kaltem Wasser nach Anspruch 1, wobei:
die erste Verstopfungseinheit einen ersten ringförmigen Stopfen (35), einen Schiebeboden (34) mit einem Durchgangsloch und eine erste Feder (36) umfasst;
der erste ringförmige Stopfen (35) fest mit dem Schiebeboden (34) verbunden ist und dem ersten Wasserdurchgangsloch (131) gegenüberliegt;
der Schiebeboden (34) so konfiguriert ist, dass er entlang einer Innenwand der ersten Kammer in einer abdichtenden Weise gleitet, und eine Temperaturfühlerkammer zwischen dem Schiebeboden (34) und einer geschlossenen Seite der ersten Kammer ausgebildet ist;
die Temperaturfühlerkammer immer mit dem ersten Wasserdurchgangsloch (131) über das Durchgangsloch in dem Schiebeboden (34) und ein zentrales Loch des ersten ringförmigen Stopfens (35) in Verbindung steht;
die Temperaturfühlereinheit eine Speicherfeder (32) aufweist und im Inneren der Temperaturerfassungskammer vorgesehen ist;
die erste Feder (36) zwischen dem Schiebeboden (34) und der ersten ringförmigen Wasserdurchgangsfläche (13) vorgesehen und auf dem ersten ringförmigen Stopfen (35) aufgesteckt ist;
die Speicherfeder (32) sich bei Wärme ausdehnt und den Schiebeboden (34) drückt, um den ersten ringförmigen Stopfen (35) anzutreiben, um die Verbindung zwischen dem ersten Wasserdurchgangsloch (131) und dem Spalt (37) zu unterbrechen;
die Speicherfeder (32) sich bei Kälte zusammenzieht, und die erste Feder (36) den Schiebeboden (34) und den ersten ringförmigen Stopfen (35) von der ersten ringförmigen Wasserdurchgangsfläche (13) wegdrückt, um die Verbindung zwischen dem ersten Wasserdurchgangsloch (131) und dem Spalt (37) zu realisieren.

3. Ventil zur automatischen Abgabe von kaltem Wasser nach Anspruch 1, wobei die erste Kammer durch einen inneren Hohlraum eines Ventildeckels (31) gebildet wird und eine Außenwand des Ventildeckels (31) fest mit dem Ventilkörper (1) verbunden ist.

4. Ventil zur automatischen Abgabe von kaltem Wasser nach einem der Ansprüche 1 bis 3, wobei der Ventilsitz (51) mit einem zweiten Wassereinlass (511), einem zweiten Wasserauslass (512) und einer zweiten Wasserdurchgangsöffnung (513) versehen ist; der zweite Wassereinlass (511) als Loch in der Wand des großen Lochs (514) vorgesehen ist und immer mit dem ersten Wassereinlass (11) in Verbindung steht;
der zweite Wasserauslass (512) als Loch in der Wand des kleinen Lochs (516) vorgesehen ist und immer mit dem ersten Wasserauslass (11) in Verbindung steht;
der Wasserdurchgangsweg zwischen dem zweiten Wassereinlass (511) und dem zweiten Wasserauslass (512) gebildet wird;
das zweite Wasserdurchgangsloch (513) in einer Endfläche des großen Lochs (514) des Ventilsitzes (51) vorgesehen ist und immer mit dem zweiten Wassereinlass (511) in Verbindung steht.

5. Ventil zur automatischen Abgabe von kaltem Wasser nach einem der Ansprüche 1 bis 4, wobei der Ventilkörper (1) mit einer zweiten ringförmigen Wasserdurchgangsfläche (14) versehen ist, und ein drittes Wasserdurchgangsloch (141), das stets mit dem ersten Wasserdurchgangsloch (131) in Verbindung steht, auf der zweiten ringförmigen Wasserdurchgangsfläche (14) vorgesehen ist und eine Öffnung aufweist, die kleiner als der Außendurchmesser des zweiten ringförmigen Stopfens (52) ist;
die Endfläche des großen Lochs (514) des Ventilsitzes (51) dichtend gegen die zweite ringförmige Wasserdurchgangsfläche (14) drückt;
in einem Ausgangszustand die zweite Wasserdurchgangsöffnung (513) mit der dritten Wasserdurchgangsöffnung (141) verbunden ist;
wenn der Knopf (58) gedrückt wird, die Gleitstange (55) den zweiten ringförmigen Stopfen (52) antreibt, um gegen die zweite ringförmige Wasserdurchgangsläche (14) zu drücken, um das dritte Wasserdurchgangsloch (141) zu verschließen.

6. Ventil zur automatischen Abgabe von kaltem Wasser nach Anspruch 1, ferner umfassend einen hydroelektrischen Generator (7) und eine Erinnerungsbaugruppe (8), wobei
der hydroelektrische Generator (7) an einer Position in der Nähe des ersten Wassereinlasses (11) im Inneren des Ventilkörpers (1) vorgesehen ist und elektrisch mit der Erinnerungsbaugruppe (8) verbunden ist und die Erinnerungsbaugruppe (8) mit Strom versorgt;
die Erinnerungsbaugruppe (8) fest im Ventilkörper (1) montiert ist und einen Temperatursensor umfasst, eine Steuereinheit (84), einen Lautsprecher (83) und eine manuelle Öffnungs- und Schließeinheit (82);
der Temperatursensor mit dem hydroelektrischen Generator (7) kombiniert ist und an einer Position in der Nähe des ersten Wassereinlasses (11) vorgesehen ist, um Informationen über die Wassertemperatur an die Steuereinheit (84) zu senden, die elektrisch mit ihm verbunden ist;
die Steuereinheit (84) den damit elektrisch verbundenen Lautsprecher (83) steuert, um ein Erinnerungssignal abzugeben, wenn die empfangene Wassertemperaturinformation einen künstlich eingestellten Zustand erreicht;
die manuelle Öffnungs- und Schließeinheit (82) elektrisch mit dem Lautsprecher (83) verbunden ist und so konfiguriert ist, dass sie eine Funktion des Lautsprechers (83) manuell öffnet oder schließt, um das Erinnerungssignal auszugeben.

## Revendications

1. Une vanne pour décharger automatiquement de l'eau froide, comprenant :
un corps de vanne (1) pourvu d'une première entrée d'eau (11) et d'une première sortie d'eau (12) ;
un premier canal (2) pour évacuer l'eau froide, prévu entre la première entrée d'eau (11) et la première sortie d'eau (12) à l'intérieur du corps de vanne (1) ;
un premier ensemble de vanne (3) ayant une unité de détection de température et une première unité d'obturation;
un deuxième canal (4) pour évacuer l'eau mélangée, prévu entre la première entrée d'eau (11) et la première sortie d'eau (12) à l'intérieur du corps de vanne (1) et connecté en parallèle avec le premier canal (2) ;
un deuxième ensemble de vanne (5) configuré pour ouvrir ou fermer le deuxième canal (4);
dans laquelle
la première unité d'obturation est configurée pour ouvrir ou fermer le premier canal (2) au moyen d'une dilatation thermique et d'une contraction à froid de l'unité de détection de température,
dans lequel le premier ensemble de vanne (3) comprend en outre une première chambre avec une ouverture à une extrémité de celle-ci ;
le corps de vanne (1) est pourvu d'une première surface annulaire de passage d'eau (13) et la première surface annulaire de passage d'eau (13) est pourvue d'un premier trou de passage d'eau (131) communiquant avec la première entrée d'eau (11) ;
la première surface annulaire de passage d'eau (13) est prévue en face d'une ouverture du premier canal (2), et un espace (37) communiquant toujours avec la première sortie d'eau (12) est formé entre la première surface annulaire de passage d'eau (13) et l'ouverture du premier canal (2) ;
la première unité d'obturation ouvre ou ferme le premier canal (2) en réalisant ou en coupant la communication entre le premier trou de passage d'eau (131) et l'espace (37), **caractérisé en ce que** le deuxième ensemble de vanne (5) comprend un siège de vanne (51) connecté de manière étanche dans le corps de vanne (1) et une deuxième unité d'obturation ;
un chemin de passage d'eau est prévu à l'intérieur du siège de vanne, et fait partie du deuxième canal (4) ;
la seconde unité d'obturation est prévue de manière coulissante sur le siège de vanne (51) pour ouvrir ou fermer le chemin de passage d'eau et ouvrir ou fermer davantage le second canal (4),
dans lequel la seconde unité d'obturation comprend une tige coulissante (55), un second bouchon annulaire (52), un bouton (58) et un second ressort (54) ;
le chemin de passage d'eau est pourvu d'un trou étagé, et le second bouchon annulaire (52) ouvre ou ferme le chemin de passage d'eau en réalisant ou en coupant la communication entre un grand trou (514) et un petit trou (516) du trou étagé ;
la tige coulissante (55) coulisse à l'intérieur du trou étagé avec une extrémité située dans le grand trou (514), et l'autre extrémité passant à travers le petit trou (516), s'étendant hors du siège de vanne (51) et étant reliée de manière fixe au bouton (58) ;
le second bouchon annulaire (52) est relié de manière fixe à une partie, qui est située dans le grand trou (514), de la tige coulissante (55), le diamètre extérieur étant supérieur à l'ouverture du petit trou (516) et inférieur à l'ouverture du grand trou (514) ;
le second ressort (54) est manchonné sur la tige coulissante (55) et situé entre le siège de vanne (51) et le bouton (58) ;
dans un état initial, le second bouchon annulaire (52) appuie contre une surface de gradin (515) du trou étagé et coupe la communication entre le grand trou (514) et le petit trou (516) ;
lorsque le bouton (58) est pressé, la tige coulissante (55) entraîne le second bouchon annulaire (52) pour l'éloigner de la surface de gradin (515) et réaliser la communication entre le grand trou (514) et le petit trou (516) ;
lorsque le bouton (58) est relâché et que la tige coulissante (55) et le second bouchon annulaire (52) subissent une pression d'eau supérieure ou égale à une force de déformation du second ressort (54), le chemin de passage d'eau est maintenu ouvert ;
lorsque le bouton (58) est relâché et que la tige coulissante (55) et le second bouchon annulaire (52) subissent une pression d'eau qui est inférieure à la force de déformation du second ressort (54), le second ressort (54) entraîne la tige coulissante (55) et le second bouchon annulaire (52) pour revenir à l'état initial.

2. Vanne pour décharger automatiquement de l'eau froide selon la revendication 1, dans laquelle :
la première unité d'obturation comprend un premier bouchon annulaire (35), une base coulissante (34) avec un trou traversant, et un premier ressort (36) ;
le premier bouchon annulaire (35) est relié de façon fixe à la base coulissante (34) et fait face au premier trou de passage d'eau (131) ;
la base coulissante (34) est configurée pour glisser le long d'une paroi interne de la première chambre de manière étanche, et une chambre de détection de température est formée entre la base coulissante (34) et un côté fermé de la première chambre ;
la chambre de détection de température est toujours en communication avec le premier trou de passage d'eau (131) via le trou traversant de la base coulissante (34) et un trou central du premier bouchon annulaire (35) ;
l'unité de détection de température est un ressort à mémoire (32) et est prévue à l'intérieur de la chambre de détection de température ;
le premier ressort (36) est prévu entre la base coulissante (34) et la première surface annulaire de passage d'eau (13) et manchonné sur le premier bouchon annulaire (35) ;
le ressort à mémoire (32) se détend sous l'effet de la chaleur et pousse la base coulissante (34) pour entraîner le premier bouchon annulaire (35) afin de couper la communication entre le premier trou de passage d'eau (131) et l'espace (37) ;
le ressort à mémoire (32) se contracte à froid, et le premier ressort (36) pousse la base coulissante (34) et le premier bouchon annulaire (35) à l'écart de la première surface annulaire de passage d'eau (13) pour réaliser la communication entre le premier trou de passage d'eau (131) et l'espace (37).

3. Vanne pour décharger automatiquement de l'eau froide selon la revendication 1, dans laquelle la première chambre est formée par une cavité intérieure d'un couvercle de vanne (31), et une paroi extérieure du couvercle de vanne (31) est reliée de manière fixe au corps de vanne (1).

4. Vanne pour décharger automatiquement de l'eau froide selon l'une quelconque des revendications 1 à 3, dans laquelle le siège de vanne (51) est muni d'une deuxième entrée d'eau (511), d'une deuxième sortie d'eau (512) et d'un deuxième trou de passage d'eau (513) ;
la deuxième entrée d'eau (511) est prévue comme un trou dans la paroi du grand trou (514) et est toujours en communication avec la première entrée d'eau (11) ;
la seconde sortie d'eau (512) est prévue sous la forme d'un trou dans la paroi du petit trou (516) et est toujours en communication avec la première sortie d'eau (11) ;
le chemin de passage d'eau est formé entre la seconde entrée d'eau (511) et la seconde sortie d'eau (512) ;
le deuxième trou de passage d'eau (513) est prévu dans une surface d'extrémité du grand trou (514) du siège de vanne (51) et est toujours en communication avec la deuxième entrée d'eau (511).

5. Vanne pour décharger automatiquement de l'eau froide selon l'une quelconque des revendications 1 à 4, dans laquelle le corps de vanne (1) est pourvu d'une deuxième surface annulaire de passage d'eau (14), et un troisième trou de passage d'eau (141) communiquant toujours avec le premier trou de passage d'eau (131) est prévu sur la deuxième surface annulaire de passage d'eau (14) et a une ouverture inférieure au diamètre extérieur du deuxième bouchon annulaire (52) ;
la surface d'extrémité du grand trou (514) du siège de vanne (51) appuie contre la seconde surface annulaire de passage d'eau (14) de manière étanche ;
dans un état initial, le deuxième trou de passage d'eau (513) est en communication avec le troisième trou de passage d'eau (141) ;
lorsque le bouton (58) est enfoncé, la tige coulissante (55) entraîne le deuxième bouchon annulaire (52) pour le presser contre la deuxième surface annulaire de passage d'eau (14) afin de boucher le troisième trou de passage d'eau (141).

6. Vanne pour décharger automatiquement de l'eau froide selon la revendication 1, comprenant en outre un générateur hydroélectrique (7) et un ensemble de rappel (8), dans laquelle
le générateur hydroélectrique (7) est prévu à une position, proche de la première entrée d'eau (11), à l'intérieur du corps de vanne (1), et est connecté électriquement à l'ensemble de rappel (8) et fournit de l'énergie à l'ensemble de rappel (8) ;
l'ensemble de rappel (8) est monté de manière fixe dans le corps de vanne (1) et comprend un capteur de température, une unité de commande (84), un haut-parleur (83) et une unité d'ouverture et de fermeture manuelle (82) ;
le capteur de température est combiné au générateur hydroélectrique (7) et est prévu à une position proche de la première entrée d'eau (11) pour envoyer des informations sur la température de l'eau à l'unité de commande (84) connectée électriquement à celle-ci ; l'unité de commande (84) commande le haut-parleur (83) relié électriquement à celle-ci pour émettre un signal de rappel lorsque l'information de température d'eau reçue atteint une condition fixée artificiellement ;
l'unité d'ouverture et de fermeture manuelle (82) est connectée électriquement au haut-parleur (83) et configurée pour ouvrir ou fermer manuellement une fonction du haut-parleur (83) pour émettre le signal de rappel.
